# EUROPÄISCHE PATENTSCHRIFT

(11) **EP 3 812 217 B1**
(45) Veröffentlichungstag und Bekanntmachung des Hinweises auf die Patenterteilung: **28.12.2022**
(21) Anmeldenummer: 19204590.4
(22) Anmeldetag: 22.10.2019
(51) Int. Cl.: B60R 13/02, B60H 1/00, B60H 1/24, B60Q 3/54

(54) **DACHMODUL**
ROOF MODULE
MODULE DE TOIT

(43) Veröffentlichungstag der Anmeldung: 28.04.2021
(73) Patentinhaber: MAGNA STEYR Fahrzeugtechnik GmbH & Co KG, 8041 Graz (AT)
(72) Erfinder: PASSEGGER, Wolfgang, 8430 Tillmitsch (AT); TRUMMER, Peter, 8010 Graz (AT); CURK, Martin, 8580 St. Martin am Wöllmissberg (AT); DOMWEBER, Johann, 8361 Hatzendorf (AT)
(74) Vertreter: Zangger, Bernd

(56) Entgegenhaltungen:
- EP-A2- 1 223 082
- EP-A2- 1 302 369
- WO-A1-99/48712
- DE-A1-102012 003 497
- DE-B4- 10 362 300
- GB-A- 2 389 825

## Beschreibung

### Gebiet der Erfindung

Die vorliegende Erfindung betrifft ein Dachmodul für ein Kraftfahrzeug und ein Kraftfahrzeug mit einem solchen Dachmodul.

### Stand der Technik

Es ist bekannt, dass Dächer für Kraftfahrzeuge einen Dachhimmel umfassen können, der einem Innenraum des Kraftfahrzeugs zugewandt, also an der Innenseite eines Daches ausgebildet sein kann. Derartige Dachhimmel können als thermogeformte Kunststoffbauteile ausgeführt sein. Dachhimmel können mit weiteren Dachteilen, mit Befestigungsteilen und/oder mit Funktionsteilen, wie zum Beispiel Belüftungskanälen oder Beleuchtungselementen, zusammen ein Dachmodul bilden.

Aus der DE 103 62 300 B4 ist eine Belüftungseinrichtung in einem Fahrzeuginnenraum eines Fahrzeuges, insbesondere eines Nutzfahrzeuges, nach dem Oberbegriff von Anspruch 1 bekannt, mit einem im Fahrzeuginnenraum angeordneten Dachhimmel, der wenigstens bereichsweise durch einen Hohlkörper gebildet ist, wobei letzterer einen Hohlkörper-Hohlraum einschließt und der eine einem Fahrzeugdach zugewandte Oberplatte und eine dem Fahrzeuginnenraum zugewandte Unterplatte umfasst, wobei zwischen der Oberplatte und der Unterplatte im Hohlkörper-Hohlraum wenigstens ein Abstandselement angeordnet ist, wobei das wenigstens eine Abstandselement im Hohlkörper-Hohlraum so angeordnet und ausgebildet ist, dass dieses im Hohlkörper-Hohlraum wenigstens einen Luftleitkanal ausbildet mit dem ein in den Hohlkörper einströmender Luftstrom durch den Hohlkörper hindurch gezielt in den Fahrzeuginnenraum hinein leitbar ist, der Hohlkörper mit wenigstens einer Belüftungsquelle, vorzugsweise einem Gebläse, unmittelbar oder mittelbar strömungsmäßig gekoppelt oder koppelbar ist und zwischen dem Hohlkörper und der Belüftungsquelle wenigstens eine Stelleinrichtung angeordnet oder anordenbar ist, mittels der ein einzelner und/oder mehrere und/oder alle Luftleitkanäle mit Luft versorgbar sind.

Die EP 1 302 369 A2 offenbart ein Deckenverkleidungs- und Luftleitsystem für Großraumfahrzeuge mit sich in Fahrzeuglängsrichtung jeweils im Übergangsbereich von der Fahrzeugdecke zu den Fahrzeugseitenwänden erstreckenden, am Fahrzeugaufbau befestigbaren Trägerprofilen und jeweils daran anordbaren Verkleidungsprofilen, wobei in jedem Übergangsbereich jeweils zwei Verkleidungsprofile vorgesehen und derart an den Trägerprofilen angeordnet sind, dass sich die Längskantenbereiche der Verkleidungsprofile unter Bildung einer ersten Spaltöffnung überlappen, wobei das in der Einbaulage obere Verkleidungsprofil mit seiner oberen Randkante vom Fahrzeugdach oder einer darunter angeordneten Dachverkleidung zwecks Bildung einer zweiten Spaltöffnung beabstandet ist und wobei zwischen dem Fahrzeugaufbau und den Verkleidungsprofilen jeweils ein Luftkanal ausgebildet ist.

### Zusammenfassung der Erfindung

Es ist eine Aufgabe der Erfindung, ein Dachmodul für ein Kraftfahrzeug anzugeben, das die Verwirklichung von Zusatzfunktionen wie Belüftung oder Beleuchtung unterstützt und dabei einfach und kostengünstig hergestellt werden kann. Eine Aufgabe der Erfindung ist es auch ein Kraftfahrzeug mit einem solchen Dachmodul anzugeben, dass für derartige Zusatzfunktionen vorbereitet oder ausgebildet ist.

Die Lösung der Aufgabe erfolgt durch ein Dachmodul für ein Kraftfahrzeug mit den Merkmalen gemäß Anspruch 1.

Das Dachmodul umfasst erfindungsgemäß einen Dachhimmel, wobei der Dachhimmel ein thermogeformtes Kunststoffbauteil ist, einen in Einbaulage von einem Fahrzeuginnenraum aus gesehen außerhalb des Dachhimmels angeordneten Dachhimmelseitenteil, wobei der Dachhimmelseitenteil ein thermogeformtes Kunststoffbauteil ist, wobei zwischen dem Dachhimmel und dem Dachhimmelseitenteil eine Kontaktlinie verläuft, wobei die Kontaktlinie durch ein Verbindungsbauteil, insbesondere ein Dichtungsbauteil, ausgebildet ist und/oder wobei die Kontaktlinie durch direkten Kontakt zwischen dem Dachhimmel und dem Dachhimmelseitenteil ausgebildet ist, wobei in Einbaulage fahrzeugrandseitig der Kontaktlinie ein zum Fahrzeuginnenraum hin offener Spalt zwischen Dachhimmel und Dachhimmelseitenteil verläuft, so dass zwischen Dachhimmel und Dachhimmelseitenteil fahrzeugrandseitig der Kontaktlinie ein Kanal gebildet ist, der in Einbaulage zum Fahrzeuginnenraum hin offen ist.

Erfindungsgemäß ist ein Dachmodul aus zwei Lagen aufgebaut, nämlich einem innen - also näher am Fahrzeuginnenraum - liegenden Dachhimmel und einem, oder bevorzugt zwei, außen - also weiter entfernt vom Fahrzeuginnenraum - liegenden Dachhimmelseitenteilen, wobei ein Dachhimmelseitenteil bevorzugt nur einen Abschnitt des Dachhimmels von außen überdeckt. Der oder die Dachhimmelseitenteile erstrecken sich bevorzugt in Einbaulage in Fahrzeuglängsrichtung entlang einer oder beider Seiten eines Fahrzeuges, also im Wesentlichen oberhalb der Seitenwände und Seitenfenster eines Fahrzeuges.

Dachhimmel und Dachhimmelseitenteil sind über eine den Dachhimmel mit dem Dachhimmelseitenteil verbindende Kontaktlinie, insbesondere eine Dichtungsleiste, miteinander verbunden, die bevorzugt zumindest abschnittsweise in Längsrichtung des Seitenteils und besonders bevorzugt auch in Längsrichtung des Fahrzeugs angeordnet ist. Die Kontaktlinie verläuft zumindest nicht vollständig in Querrichtung des Seitenteils und des Fahrzeugs. Die Kontaktlinie trennt damit einen fahrzeugrandseitigen Teil des Dachmoduls, der näher der linken oder rechten Außenseite des Kraftfahrzeuges liegt, von einem Teil des Dachmoduls der näher zur Längsmittelachse des Kraftfahrzeugs liegt. Der in Relation zur Kontaktline fahrzeugrandseitige Teil des Dachmoduls, also der von der Fahrzeuglängsmittelachse entferntere Teil, bildet einen Kanal aus, der über einen sich vorzugsweise in Fahrzeuglängsrichtung erstreckenden Spalt mit dem Fahrzeuginnenraum fluidverbunden ist.

Erfindungsgemäß wird daher durch die Verwendung zweier einfacher thermogeformter Kunststoffbauteile, die abschnittsweise miteinander unmittelbar oder mittelbar verbunden sind, in einem Dachmodul ein Kanal ausgebildet, der über einen Spalt mit dem Fahrzeug-Innenraum verbunden ist, so dass über den Spalt zwischen Dachhimmel und Dachhimmelseitenteil auf einfache und effiziente Weise beispielsweise Luft oder Licht in den Innenraum des Kraftfahrzeugs zuführbar ist.

Erfindungsgemäß bildet der Dachhimmelseitenteil auf seiner dem Dachhimmel zugewandten Seite abschnittsweise eine Reflexionsfläche aus, die dem Spalt benachbart ist und die mit dem Spalt einen Winkel kleiner 90 Grad bildet. Die Reflexionsfläche kann also genutzt werden um beispielsweise Licht oder Luft aus dem Kanal in den Spalt umzulenken. Bevorzugt wird die Richtung des eintreffenden Mediums, insbesondere Licht oder Luft, von der Reflexionsfläche um ca. 90 Grad umgelenkt.

Das Dachmodul umfasst erfindungsgemäß einen Leuchtstreifen, wobei der Leuchtstreifen so angeordnet ist, dass das Licht des Leuchtstreifens über die Reflexionsfläche durch den Spalt geleitet wird.

Erfindungsgemäß umfasst das Dachmodul zumindest ein Verbindungsprofil, wobei das Verbindungsprofil eine Verbindung zwischen dem Dachhimmel und dem Dachhimmelseitenteil bildet, wobei bevorzugt das Verbindungsprofil zumindest abschnittsweise die Kontaktlinie zwischen dem Dachhimmel und dem Dachhimmelseitenteil bildet und somit ein Verbindungsbauteil zwischen Dachhimmel und Dachhimmelseitenteil darstellt.

Auf dem Verbindungsprofil ist erfindungsgemäß eine Leuchte, nämlich ein Leuchtstreifen, befestigt.

Das Verbindungsprofil ist erfindungsgemäß ein U-Profil.

Auf dem Boden des U-Profils ist erfindungsgemäß der Leuchtstreifen befestigt.

Vorzugsweise verläuft der Spalt zwischen Dachhimmel und Dachhimmelseitenteil in einer Längsrichtung des Dachhimmelseitenteils. Besonders bevorzugt verläuft der Spalt in Einbaulage in einer Längsrichtung des Kraftfahrzeuges. Bevorzugt verläuft auch die Kontaktlinie zumindest abschnittsweise in der Längsrichtung des Dachhimmelseitenteils.

Vorzugsweise ist der Dachhimmel über mehrere Clips mit dem Dachhimmelseitenteil verclipst. Bevorzugt ist der Dachhimmel mit dem Dachhimmelseitenteil ausschließlich verclipst und nicht verklebt.

An der Reflexionsfläche ist bevorzugt ein optisch reflektierendes Element oder eine optisch reflektierende Beschichtung angeordnet.

Bevorzugt umfasst das Dachmodul zumindest einen Halter, wobei der Halter vorzugsweise ein thermogeformtes Kunststoffbauteil ist, wobei der Halter eine in Längsrichtung des Dachhimmelseitenteils verlaufende Leiste bildet, wobei an der in Einbaulage dem Fahrzeuginnenraum zugewandten Seite des Halters der Dachhimmel am Halter befestigt ist und an der in Einbaulage vom Fahrzeuginnenraum abgewandten Seite des Halters der Dachhimmelseitenteil am Halter befestigt ist.

Der Dachhimmel ist bevorzugt stoffschlüssig am Halter befestigt und der Dachhimmelseitenteil ist bevorzugt über mehrere Clips mit dem Halter verclipst.

An einem in Einbaulage dem Fahrzeuginnenraum zugewandten Schenkel des U-Profils ist vorzugsweise der Dachhimmel am U-Profil befestigt und an einem in Einbaulage vom Fahrzeuginnenraum abgewandten Schenkel des U-Profils der Dachhimmelseitenteil am U-Profil befestigt.

Bevorzugt ist der Dachhimmel stoffschlüssig am U-Profil befestigt und der Dachhimmelseitenteil ist bevorzugt über zumindest einen Clip mit dem U-Profil verclipst.

Der in Einbaulage dem Fahrzeuginnenraum zugewandte Schenkel des U-Profils ist bevorzugt in der Nähe des Spalts zwischen Dachhimmel und Dachhimmelseitenteil angeordnet, wobei die offene Seite der U-Form des U-Profils auf derjenigen Seite des Dachhimmels liegt, die dem Spalt zugewandt ist.

Das Verbindungsprofil bzw. das U-Profil muss kein durchgängiges Bauteil sein, dass gleich lang ausgestaltet ist wie ein daran befestigter Leuchtstreifen, beispielsweise LED-Streifen, sondern es können mehrere separate Bauteile sein, an denen ein sich in der Länge erstreckender Leuchtstreifen jeweils befestigt ist.

Bevorzugt umfasst das Dachmodul einen Luftschlauch, wobei der Luftschlauch mit einer Öffnung des Dachhimmelseitenteils fluidverbunden ist, so dass über den Luftschlauch dem Kanal Luft zugeführt werden kann. Die über den Luftschlauch zugeführte Luft, kann dann über den Kanal in den Fahrzeuginnenraum gelangen, insbesondere im Bereich von Seitenfenstern des Kraftfahrzeuges. Für die Luftzuführung werden bevorzugt keine Luftauslassdüsen und keine Lüftungsschlitzabdeckungen verwendet. Vielmehr erfolgt die Luftzuführung einfach durch den Spalt zwischen Dachhimmel und Dachhimmelseitenteil. Dachhimmel und Dachhimmelseitenteil bilden somit zusammen den Luftzuführungskanal in den Fahrzeuginnenraum aus.

Ein Kraftfahrzeug kann erfindungsgemäß ein Dachmodul wie oben beschrieben umfassen. Dabei ist der Dachhimmel dem Fahrzeuginnenraum zugewandt, bildet also eine innere Schicht des Daches. Der Dachhimmelseitenteil ist vom Fahrzeuginnenraum abgewandt, bildet also eine äußere Schicht des Daches. Fahrzeugrandseitig der Kontaktlinie, also jeweils von der Fahrzeuglängsmittelachse aus gesehen außen, verläuft ein Spalt zwischen Dachhimmel und Dachhimmelseitenteil in der Längsrichtung des Dachhimmelseitenteils, so dass zwischen Dachhimmel und Dachhimmelseitenteil ein Kanal gebildet ist, der in der Längsrichtung des Dachhimmelseitenteils verläuft und der zum Fahrzeuginnenraum hin offen ist.

### Kurzbeschreibung der Zeichnungen

Die Erfindung wird im Folgenden beispielhaft unter Bezugnahme auf die Zeichnungen beschrieben.
- Fig. 1: ist eine dreidimensionale Teildarstellung eines erfindungsgemäßen Dachmoduls im Bereich eines Dachhimmelseitenteils.
- Fig. 2: ist eine Schnittansicht des Dachmoduls gemäß Fig. 1 im Bereich der Luftschlauchöffnung mit angeschlossenem Luftschlauch.
- Fig. 3: ist eine Schnittansicht des Dachmoduls gemäß Fig. 1 im Bereich eines U-Profils.
- Fig. 4: ist eine Schnittansicht des Dachmoduls gemäß Fig. 1 im Bereich des oberen oder unteren Halters.

### Detaillierte Beschreibung der Erfindung

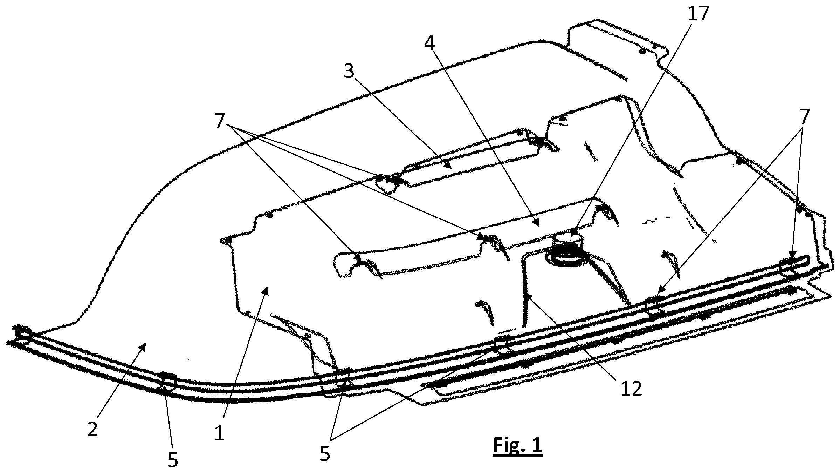

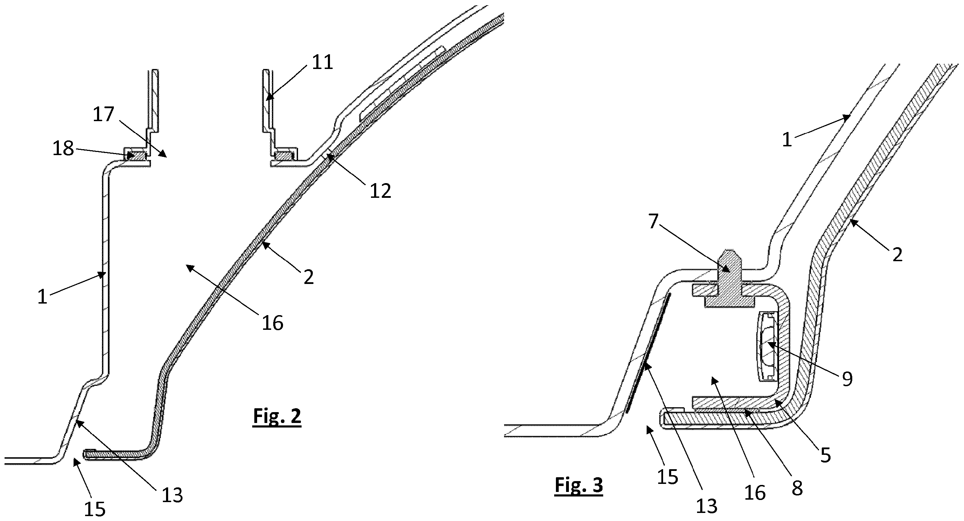

In Fig. 1 ist ein erfindungsgemäßes Dachmodul dargestellt, welches einen, hier nur ausschnittsweise dargestellten, Dachhimmel 2 umfasst, der einen Innenraum eines Kraftfahrzeuges überdeckt und der ein thermogeformtes Kunststoffbauteil ist. Das Dachmodul umfasst ferner einen in Einbaulage vom Fahrzeuginnenraum aus gesehen außerhalb des Dachhimmels 2 angeordneten, also eine äußere Schicht bildenden Dachhimmelseitenteil 1, wobei der Dachhimmelseitenteil 1 ebenfalls ein thermogeformtes Kunststoffbauteil ist. Zwischen dem Dachhimmel 2 und dem Dachhimmelseitenteil 1 verläuft eine Kontaktlinie 12, nämlich eine Dichtung, die in Fig. 1 nur abschnittsweise dargestellt ist und die sowohl mit dem Dachhimmel 2 als auch mit dem Dachhimmelseitenteil 1 dicht verbunden ist. Fahrzeugrandseitig der Kontaktlinie 12, also in Richtung des äußeren Randes des Dachhimmels 2, verläuft ein zum Fahrzeuginnenraum hin offener Spalt 15 zwischen Dachhimmel 2 und Dachhimmelseitenteil 1, der in den Fig. 2 und Fig. 3 zu sehen ist. Es wird somit durch die Kontaktlinie 12 bzw. durch die Dichtung zwischen Dachhimmel 2 und Dachhimmelseitenteil 1 ein Kanal 16 gebildet, der in Einbaulage zum Fahrzeuginnenraum hin über den Spalt 15 offen ist.

Erfindungsgemäß kann daher eine Luftführung zwischen zwei thermogeformten Bauteilen 1, 2 erfolgen, die einen Kanal 16, insbesondere einen Luftkanal bilden.

Durch das Verclipsen des Dachhimmels 2 mit dem Dachhimmelseitenteil 1 und dem damit verbundenen Verpressen der Dichtung an der Kontaktlinie 12 entsteht zwischen den Bauteilen der Kanal 16, insbesondere Luftkanal. Dieser Kanal 16 kann, wie dargestellt, nur im Auslassbereich ausgebildet sein, aber auch quer über den Verlauf der beiden thermogeformten Teile 1, 2 genutzt werden.

Der Kanal 16 kann eine gleiche Querschnittsfläche bei veränderten Längen/Breiten über den Bauteilverlauf 1, 2 aufweisen. Ferner sind sowohl querschnitterweiternde- (Diffusor) als auch querschnittsveringernde (Düse) Ausführungen oder Bereiche des Kanals 16 möglich. Somit kann im Auslassbereich, also am Spalt 15, ein strömungstechnisch optimierter Luftauslass ausgebildet werden.

Der Winkel der angestellten Fläche des Dachhimmelseitenteils 1 im Auslassbereich, also der Reflexionsfläche 13, gibt die Strömungsrichtung beispielsweise für ausströmende Luft, vor. Damit kann der Luftverlauf und somit die Strömung Richtung Seitenscheibe optimiert werden.

Die Luftzufuhr kann beispielsweise durch am Markt erhältliche Standard-Luftschläuche 11 oder speziell optimierte Luftschläuche erfolgen. An der Luftschlauchöffnung 17 des Dachmoduls kann auch ein Anschlussstück für einen vorgesehenen Luftschlauch 11 ausgeführt sein.

Durch eine Luftzufuhr über ein erfindungsgemäßes Dachmodul können mehre Vorteile erreicht werden. Ein Passagier wird nicht direkt von der konditionierten Luft angeblasen. Der Luftstrom kann eine Defrost/Demist-Funktion für die Scheiben rundum erfüllen. Über die Länge des Luftauslasses kann die Breite des anzuströmenden Bereiches auf einfache Weise vorgegeben werden.

Die Bauteile des Dachmoduls können aus folgenden Materialien bzw. durch folgende Verfahren hergestellt sein: Das Dachhimmelseitenteil 1 als Kunststoffteil, vorzugsweise vakuumtiefgezogenes Kunststoffbauteil insbesondere Thermoformteil, ebenso der Dachhimmel 2, der Halter 3 oben und der Halter 4 unten am Dachmodul.

Die Verbindungsprofile 5, nämlich U-Profile, können Aluminium Strangpressprofile oder Fräsbeschnitte sein, beispielsweise aus Kunststoff, die Clips 7 können durch Tannenbaumclips realisiert sein. Die Kontaktlinie 12 kann beispielsweise durch ein flüssiges Dichtmittel oder ein Dichtschaumband realisiert sein. Die Kontaktlinie 12, und insbesondere eine dichtende Kontaktlinie 12, kann auch bereits durch das Dachhimmelseitenteil 1 und/oder durch den Dachhimmel 2 selbst ausgebildet sein, sodass kein zusätzliches Dichtungsbauteil erforderlich ist.

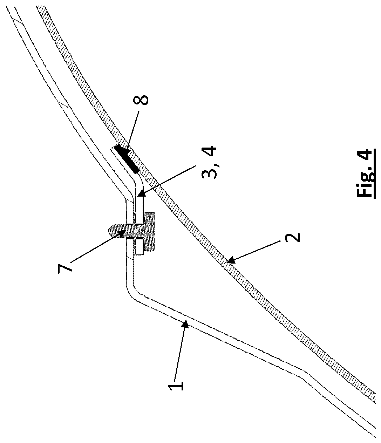

Die Verbindungen der Bauteile des Dachmoduls können auf folgende Weise hergestellt sein: Der Halter 3 (oben) kann auf dem Dachhimmel 2 vormontiert sein, insbesondere geklebt mittels Klebstoff 8 (siehe Fig. 4) oder Ultraschall-geschweißt. Durch Clips 7, insbesondere durch zwei Clips 7, kann der Halter 3 (oben) an einem Dachhimmelseitenteil 1 befestigt sein.

Der Halter 4 - unten in Fig. 1 - ist ebenfalls auf dem Dachhimmel 2 vormontiert, insbesondere geklebt, oder Ultraschall-geschweißt, und beispielsweise durch drei Clips 7 am Dachhimmelseitenteil 1 befestigt. Der als Verbindungsprofil 5, nämlich als U-Profil ausgeführte Halter ist ebenso am Dachhimmel 2 vormontiert, insbesondere mittels Klebstoff 8 geklebt (siehe Fig. 3). Ein Verbindungsprofil 5 kann durch jeweils einen Clip 7 am Dachhimmelseitenteil 1 befestigt sein. Es können beispielsweise mindestens vier Clips 7 an einem Dachhimmelseitenteil 1 vorgesehen sein.

Die Befestigung eines Luftschlauches 11 kann so erfolgen, dass ein Anschlussstück mit aufgestecktem Luftschlauch 11 mit einem Dachhimmelseitenteil 1 verschraubt wird und durch eine eingelegte Luftschlauchdichtung 18 gedichtet wird.

Die Abdichtung an der Kontaktlinie 12 zwischen Dachhimmel 2 und Dachhimmelseitenteil 1 erfolgt durch eine vormontierte Dichtung.

Zusätzlich oder alternativ zu einer Belüftungsfunktion erfüllt ein erfindungsgemäßes Dachmodul eine Beleuchtungsfunktion, insbesondere für eine Ambiente-Beleuchtung des Innenraums eines Kraftfahrzeuges.

Die Halter, die Verbindungsprofile 5 darstellen, können gleichzeitig Aufnahmen für Leuchtstreifen 9, insbesondere LED-Streifen, bilden. Die Leuchtstreifen 9 können beispielsweise umfassen: einen Aluminium-Kühlkörper, einen LED-Streifen, optional eine Streuscheibe. Die U-Profile 5 mit den Leuchtstreifen 9 können wiederum vormontiert, insbesondere geklebt, sein auf dem Dachhimmel 2.

Der Spalt 15 zwischen Dachhimmel 2 und Dachhimmelseitenteil 1 ergibt eine rundum gleichmäßige Lichtfuge für das Ambiente Licht. Der Spalt 15 wird über den bzw. die Halter mit U-Profil 5 eingestellt und definiert. Die schräge Fläche am Dachhimmelseitenteil 1 gegenüber dem Leuchtstreifen 9 dient als optische Reflexionsfläche 13 zur gleichmäßigen Darstellung der Ambiente Beleuchtung. Der Abstand und Winkel zwischen LED-Streifen 9 und Reflexionsfläche 13 sind vorzugsweise rundum gleich ausgeführt, um ein gleichmäßiges Lichtergebnis zu erhalten. Die optionale Streuscheibe am Leuchtstreifen 9 unterstützt die Vermeidung von unerwünschten Hotspots.

### Bezugszeichenliste

- 1: Dachhimmelseitenteil
- 2: Dachhimmel
- 3: (oberer) Halter
- 4: (unterer) Halter
- 5: Verbindungsprofil
- 7: Clips
- 8: Klebstoff
- 9: Leuchtstreifen
- 11: Luftschlauch
- 12: Kontaktlinie
- 13: Reflexionsfläche
- 15: Spalt
- 16: Kanal
- 17: Luftschlauchöffnung
- 18: Luftschlauchdichtung

## Patentansprüche

1. Dachmodul für ein Kraftfahrzeug, umfassend einen Dachhimmel (2), wobei der Dachhimmel (2) ein thermogeformtes Kunststoffbauteil ist, einen in Einbaulage von einem Fahrzeuginnenraum aus gesehen außerhalb des Dachhimmels (2) angeordneten Dachhimmelseitenteil (1), wobei der Dachhimmelseitenteil (1) ein thermogeformtes Kunststoffbauteil ist, wobei zwischen dem Dachhimmel (2) und dem Dachhimmelseitenteil (1) eine Kontaktlinie (12) verläuft, wobei die Kontaktlinie (12) durch ein Verbindungsbauteil, insbesondere ein Dichtungsbauteil, ausgebildet ist und/oder wobei die Kontaktlinie (12) durch direkten Kontakt zwischen dem Dachhimmel (2) und dem Dachhimmelseitenteil (1) ausgebildet ist, wobei in Einbaulage fahrzeugrandseitig der Kontaktlinie (12) ein zum Fahrzeuginnenraum hin offener Spalt (15) zwischen Dachhimmel (2) und Dachhimmelseitenteil (1) verläuft, so dass zwischen Dachhimmel (2) und Dachhimmelseitenteil (1) fahrzeugrandseitig der Kontaktlinie (12) ein Kanal (16) gebildet ist, der in Einbaulage zum Fahrzeuginnenraum hin offen ist, wobei der Dachhimmelseitenteil (1) auf seiner dem Dachhimmel (2) zugewandten Seite abschnittsweise eine Reflexionsfläche (13) ausbildet, die dem Spalt (15) benachbart ist und die mit dem Spalt (15) einen Winkel kleiner 90 Grad bildet, **dadurch gekennzeichnet dass** das Dachmodul einen Leuchtstreifen (9) umfasst, wobei der Leuchtstreifen (9) so angeordnet ist, dass das Licht des Leuchtstreifens (9) über die Reflexionsfläche (13) durch den Spalt (15) geleitet wird, wobei das Dachmodul zumindest ein Verbindungsprofil (5) umfasst, wobei das Verbindungsprofil (5) eine Verbindung zwischen dem Dachhimmel (2) und dem Dachhimmelseitenteil (1) bildet, wobei bevorzugt das Verbindungsprofil (5) zumindest abschnittsweise die Kontaktlinie (12) zwischen dem Dachhimmel (2) und dem Dachhimmelseitenteil (1) bildet, wobei das Verbindungsprofil (5) durch ein U-Profil gebildet wird, wobei auf dem Boden des U-Profils der Leuchtstreifen (9) befestigt ist.

2. Dachmodul nach Anspruch 1,
**dadurch gekennzeichnet, dass** der Spalt (15) zwischen Dachhimmel (2) und Dachhimmelseitenteil (1) in einer Längsrichtung des Dachhimmelseitenteils (1) und/oder in Einbaulage in einer Längsrichtung des Kraftfahrzeuges verläuft.

3. Dachmodul nach zumindest einem der vorhergehenden Ansprüche, **dadurch gekennzeichnet, dass** der Dachhimmel (2) über mehrere Clips (7) mit dem Dachhimmelseitenteil (1) verclipst ist.

4. Dachmodul nach zumindest einem der vorhergehenden Ansprüche, **dadurch gekennzeichnet, dass** an der Reflexionsfläche (13) ein optisch reflektierendes Element oder eine optisch reflektierende Beschichtung angeordnet ist.

5. Dachmodul nach zumindest einem der vorhergehenden Ansprüche, **dadurch gekennzeichnet, dass** das Dachmodul zumindest einen Halter (3, 4) umfasst, wobei der Halter (3, 4) eine in Längsrichtung des Dachhimmelseitenteils (1) verlaufende Leiste bildet, wobei an der in Einbaulage dem Fahrzeuginnenraum zugewandten Seite des Halters (3, 4) der Dachhimmel (2) am Halter (3, 4) befestigt ist und an der in Einbaulage vom Fahrzeuginnenraum abgewandten Seite des Halters (3, 4) der Dachhimmelseitenteil (1) am Halter (3, 4) befestigt ist, wobei der Halter (3, 4) vorzugsweise ein thermogeformtes Kunststoffbauteil ist.

6. Dachmodul nach Anspruch 5,
**dadurch gekennzeichnet, dass** der Dachhimmel (2) stoffschlüssig am Halter (3, 4) befestigt ist und der Dachhimmelseitenteil (1) über mehrere Clips (7) mit dem Halter (3, 4) verclipst ist.

7. Dachmodul nach zumindest einem der vorhergehenden Ansprüche, **dadurch gekennzeichnet, dass** an einem in Einbaulage dem Fahrzeuginnenraum zugewandten Schenkel des U-Profils der Dachhimmel (2) am U-Profil befestigt ist und an einem in Einbaulage vom Fahrzeuginnenraum abgewandten Schenkel des U-Profils der Dachhimmelseitenteil (1) am U-Profil befestigt ist.

8. Dachmodul nach zumindest einem der vorhergehenden Ansprüche, **dadurch gekennzeichnet, dass der Dach**himmel (2) stoffschlüssig am U-Profil befestigt ist und der Dachhimmelseitenteil (1) über zumindest einen Clip (7) mit dem U-Profil verclipst ist.

9. Dachmodul nach Anspruch 7 oder 8,
**dadurch gekennzeichnet, dass** der in Einbaulage dem Fahrzeuginnenraum zugewandte Schenkel des U-Profils in der Nähe des Spalts (15) zwischen Dachhimmel (2) und Dachhimmelseitenteil (1) angeordnet ist, wobei die offene Seite der U-Form des U-Profils auf derjenigen Seite des Dachhimmels (2) liegt, die dem Spalt (15) zugewandt ist.

10. Dachmodul nach zumindest einem der vorhergehenden Ansprüche, **dadurch gekennzeichnet, dass** das Dachmodul einen Luftschlauch (11) umfasst, wobei der Luftschlauch (11) mit einer Luftschlauchöffnung (17) des Dachhimmelseitenteils (1) fluidverbunden ist, so dass über den Luftschlauch (11) dem Kanal (16) Luft zugeführt werden kann.

11. Kraftfahrzeug umfassend ein Dachmodul nach zumindest einem der vorhergehenden Ansprüche,
**dadurch gekennzeichnet, dass** der Dachhimmel (2) dem Fahrzeuginnenraum zugewandt ist, dass der Dachhimmelseitenteil (1) vom Fahrzeuginnenraum abgewandt ist, wobei fahrzeugrandseitig der Kontaktlinie(12) ein Spalt (15) zwischen Dachhimmel (2) und Dachhimmelseitenteil (1) in der Längsrichtung des Dachhimmelseitenteils (1) verläuft, so dass zwischen Dachhimmel (2) und Dachhimmelseitenteil (1) ein Kanal (16) gebildet ist, der in der Längsrichtung des Dachhimmelseitenteils (1) verläuft und der zum Fahrzeuginnenraum hin offen ist.

## Claims

1. Roof module for a motor vehicle, comprising a roof lining (2), wherein the roof lining (2) is a thermoformed plastic component, a roof-lining side part (1) which, in the position of installation, is arranged outside the roof lining (2) as seen from a vehicle interior compartment, wherein the roof-lining side part (1) is a thermoformed plastic component, wherein a contact line (12) extends between the roof lining (2) and the roof-lining side part (1), wherein the contact line (12) is formed by a connecting component, in particular a sealing component, and/or wherein the contact line (12) is formed by direct contact between the roof lining (2) and the roof-lining side part (1), wherein, in the position of installation, a gap (15) which is open towards the vehicle interior compartment extends between roof lining (2) and roof-lining side part (1) at the vehicle-edge side of the contact line (12), so that a channel (16) which, in the position of installation, is open towards the vehicle interior compartment is formed between roof lining (2) and roof-lining side part (1) at the vehicle-edge side of the contact line (12), wherein, on its side facing towards the roof lining (2), the roof-lining side part (1) sectionally forms a reflection surface (13) which is adjacent to the gap (15) and which forms an angle of less than 90 degrees with the gap (15), **characterized in that** the roof module comprises a luminous strip (9), wherein the luminous strip (9) is arranged in such a way that the light of the luminous strip (9) is directed through the gap (15) via the reflection surface (13), wherein the roof module comprises at least one connecting profile (5), wherein the connecting profile (5) forms a connection between the roof lining (2) and the roof-lining side part (1), wherein preferably the connecting profile (5) at least sectionally forms the contact line (12) between the roof lining (2) and the roof-lining side part (1), wherein the connecting profile (5) is formed by a U-profile, wherein the luminous strip (9) is fastened to the base of the U-profile.

2. Roof module according to Claim 1,
**characterized in that** the gap (15) between roof lining (2) and roof-lining side part (1) extends in a longitudinal direction of the roof-lining side part (1) and/or, in the position of installation, in a longitudinal direction of the motor vehicle.

3. Roof module according to at least either of the preceding claims,
**characterized in that** the roof lining (2) is clipped to the roof-lining side part (1) via multiple clips (7).

4. Roof module according to at least one of the preceding claims,
**characterized in that** an optically reflective element or an optically reflective coating is arranged on the reflection surface (13).

5. Roof module according to at least one of the preceding claims,
**characterized in that** the roof module comprises at least one holder (3, 4), wherein the holder (3, 4) forms a strip extending in the longitudinal direction of the roof-lining side part (1), wherein the roof lining (2) is fastened to the holder (3, 4) on that side of the holder (3, 4) which, in the position of installation, faces towards the vehicle interior compartment and the roof-lining side part (1) is fastened to the holder (3, 4) on that side of the holder (3, 4) which, in the position of installation, faces away from the vehicle interior compartment, wherein the holder (3, 4) is preferably a thermoformed plastic component.

6. Roof module according to Claim 5,
**characterized in that** the roof lining (2) is fastened in a materially bonded manner to the holder (3, 4) and the roof-lining side part (1) is clipped to the holder (3, 4) via multiple clips (7).

7. Roof module according to at least one of the preceding claims,
**characterized in that** the roof lining (2) is fastened to the U-profile on a limb of the U-profile that, in the position of installation, faces towards the vehicle interior compartment and the roof-lining side part (1) is fastened to the U-profile on a limb of the U-profile that, in the position of installation, faces away from the vehicle interior compartment.

8. Roof module according to at least one of the preceding claims,
**characterized in that** the roof lining (2) is fastened in a materially bonded manner to the U-profile and the roof-lining side part (1) is clipped to the U-profile via at least one clip (7).

9. Roof module according to Claim 7 or 8,
**characterized in that** that limb of the U-profile which, in the position of installation, faces towards the vehicle interior compartment is arranged in the vicinity of the gap (15) between roof lining (2) and roof-lining side part (1), wherein the open side of the U shape of the U-profile is situated on that side of the roof lining (2) which faces towards the gap (15).

10. Roof module according to at least one of the preceding claims,
**characterized in that** the roof module comprises an air hose (11), wherein the air hose (11) is fluidically connected to an air-hose opening (17) of the roof-lining side part (1) such that air can be fed to the channel (16) via the air hose (11).

11. Motor vehicle comprising a roof module according to at least one of the preceding claims,
**characterized in that** the roof lining (2) faces towards the vehicle interior compartment, **in that** the roof-lining side part (1) faces away from the vehicle interior compartment, wherein, at the vehicle-edge side of the contact line (12), a gap (15) extends between roof lining (2) and roof-lining side part (1) in the longitudinal direction of the roof-lining side part (1), so that a channel (16) which extends in the longitudinal direction of the roof-lining side part (1) and which is open towards the vehicle interior compartment is formed between roof lining (2) and roof-lining side part (1).

## Revendications

1. Module de toit pour un véhicule automobile, comprenant une garniture de pavillon (2), la garniture de pavillon (2) étant un composant en matière plastique thermoformé, une partie latérale de garniture de pavillon (1) disposée en position installée à l'extérieur de la garniture de pavillon (2), vue à partir d'un habitacle de véhicule, la partie latérale de garniture de pavillon (1) étant un composant en matière plastique thermoformé, dans lequel une ligne de contact (12) s'étend entre la garniture de pavillon (2) et la partie latérale de garniture de pavillon (1), la ligne de contact (12) étant réalisée par un composant de jonction, en particulier un composant d'étanchéité, et/ou la ligne de contact (12) étant réalisée par un contact direct entre la garniture de pavillon (2) et la partie latérale de garniture de pavillon (1), dans lequel, en position installée, du côté bord de véhicule de la ligne de contact (12), s'étend une fente (15), ouverte vers l'habitacle de véhicule, entre la garniture de pavillon (2) et la partie latérale de garniture de pavillon (1) de sorte qu'entre la garniture de pavillon (2) et la partie latérale de garniture de pavillon (1), du côté bord de véhicule de la ligne de contact (12), se forme un canal (16) qui est en position installée ouvert vers l'habitacle de véhicule, dans lequel la partie latérale de garniture de pavillon (1), sur son côté tourné vers la garniture de pavillon (2), réalise par endroits une surface de réflexion (13) qui est adjacente à la fente (15) et qui forme avec la fente (15) un angle inférieur à 90 degrés,
**caractérisé en ce que** le module de toit comprend une bande lumineuse (9), la bande lumineuse (9) étant disposée de telle sorte que la lumière de la bande lumineuse (9) est guidée par la surface de réflexion (13) à travers la fente (15), dans lequel le module de toit comprend au moins un profilé de raccordement (5), le profilé de raccordement (5) formant un raccordement entre la garniture de pavillon (2) et la partie latérale de garniture de pavillon (1), dans lequel le profilé de raccordement (5) forme de préférence au moins par endroits la ligne de contact (12) entre la garniture de pavillon (2) et la partie latérale de garniture de pavillon (1), dans lequel le profilé de raccordement (5) est formé par un profilé en U, la bande lumineuse (9) étant fixée au fond du profilé en U.

2. Module de toit selon la revendication 1, **caractérisé en ce que** la fente (15) entre la garniture de pavillon (2) et la partie latérale de garniture de pavillon (1) s'étend dans une direction longitudinale de la partie latérale de garniture de pavillon (1) et/ou s'étend en position installée dans une direction longitudinale du véhicule automobile.

3. Module de toit selon au moins l'une des revendications précédentes, **caractérisé en ce que** la garniture de pavillon (2) est clipsée par l'intermédiaire de plusieurs clips (7) avec la partie latérale de garniture de pavillon (1).

4. Module de toit selon au moins l'une des revendications précédentes, **caractérisé en ce qu'**un élément à réflexion optique ou un revêtement à réflexion optique est disposé sur la surface de réflexion (13).

5. Module de toit selon au moins l'une des revendications précédentes, **caractérisé en ce que** le module de toit comprend au moins un support (3, 4), le support (3, 4) formant une barrette s'étendant dans la direction longitudinale de la partie latérale de garniture de pavillon (1), dans lequel, du côté du support (3, 4), tourné vers l'habitacle de véhicule en position installée, la garniture de pavillon (2) est fixée au support (3, 4), et du côté du support (3, 4), détourné de l'habitacle de véhicule en position installée, la partie latérale de garniture de pavillon (1) est fixée au support (3, 4), le support (3, 4) étant de préférence un composant en matière plastique thermoformé.

6. Module de toit selon la revendication 5, **caractérisé en ce que** la garniture de pavillon (2) est fixée au support (3, 4) par liaison de matière, et la partie latérale de garniture de pavillon (1) est clipsée avec le support (3, 4) par l'intermédiaire de plusieurs clips (7).

7. Module de toit selon au moins l'une des revendications précédentes, **caractérisé en ce que** sur une branche du profilé en U, tournée vers l'habitacle de véhicule en position installée, la garniture de pavillon (2) est fixée au profilé en U, et sur une branche du profilé en U, détournée de l'habitacle de véhicule en position installée, la partie latérale de garniture de pavillon (1) est fixée au profilé en U.

8. Module de toit selon au moins l'une des revendications précédentes, **caractérisé en ce que** la garniture de pavillon (2) est fixée au profilé en U par liaison de matière, et la partie latérale de garniture de pavillon (1) est clipsée avec le profilé en U par l'intermédiaire d'au moins un clip (7).

9. Module de toit selon la revendication 7 ou 8, **caractérisé en ce que** la branche du profilé en U, tournée vers l'habitacle de véhicule en position installée, est disposée à proximité de la fente (15) entre la garniture de pavillon (2) et la partie latérale de garniture de pavillon (1), dans lequel le côté ouvert de la forme de U du profilé en U se trouve sur le côté de la garniture de pavillon (2) qui est tourné vers la fente (15).

10. Module de toit selon au moins l'une des revendications précédentes, **caractérisé en ce que** le module de toit comprend un tube à air (11), le tube à air (11) étant en communication fluidique avec une ouverture de tube à air (17) de la partie latérale de garniture de pavillon (1) de sorte que de l'air peut être amené au canal (16) en passant par le tube à air (11).

11. Véhicule automobile, comprenant un module de toit selon au moins l'une des revendications précédentes, **caractérisé en ce que** la garniture de pavillon (2) est tournée vers l'habitacle de véhicule, **en ce que** la partie latérale de garniture de pavillon (1) est détournée de l'habitacle de véhicule,
dans lequel, du côté de bord de véhicule de la ligne de contact (12), une fente (15) s'étend entre la garniture de pavillon (2) et la partie latérale de garniture de pavillon (1) dans la direction longitudinale de la partie latérale de garniture de pavillon (1) de sorte qu'entre la garniture de pavillon (2) et la partie latérale de garniture de pavillon (1) se forme un canal (16) qui s'étend dans la direction longitudinale de la partie latérale de garniture de pavillon (1) et est ouvert vers l'habitacle de véhicule.
